# EUROPÄISCHE PATENTSCHRIFT

(11) **EP 0 428 007 B1**
(45) Veröffentlichungstag und Bekanntmachung des Hinweises auf die Patenterteilung: **14.09.1994**
(21) Anmeldenummer: 90120802.5
(22) Anmeldetag: 30.10.1990
(51) Int. Cl.: H02M 1/14, H02J 9/06

(54) **Unterbrechungsfreie Stromversorgung**
Uninterruptible power supply
Alimentation sans interruption

(30) Priorität: 13.11.1989 DE 3937746
(43) Veröffentlichungstag der Anmeldung: 22.05.1991
(73) Patentinhaber: SIEMENS AKTIENGESELLSCHAFT, 80333 München (DE)
(72) Erfinder: Skaslien, Tore Glen, Dipl.-Ing., N-7032 Trondheim (NO); Skjellnes, Asle-Einar, Dipl.-Ing., N-7053 Ranheim (NO)

(56) Entgegenhaltungen:
- DE-A- 3 637 338
- US-A- 3 768 001

## Beschreibung

Die Erfindung bezieht sich auf eine unterbrechungsfreie Stromversorgung.
Aus der US-PS 37 68 001 ist bereits eine Stromversorgung bekannt, bei der die Verbraucher im Normalbetrieb direkt aus einem Wechselstromnetz gespeist werden. Zusätzlich ist an das Netz ein Gleichrichter angeschlossen, der über Induktivitäten eine Pufferbatterie ständig nachlädt. Im Notfall speist die Pufferbatterie über einen gleichfalls am Netz liegenden Wechselrichter die Verbraucher. Je nach der gewünschten Spannung wird ein Teil der Energie auch dem Gleichrichter zugeführt und fließt so im Kreise. Zur Einsparung wird vorgeschlagen, die Induktivitäten zu unterteilen, und zwar in eine große Induktivität, die bereits beträchtlich unterhalb des Maximalstromes in Sättigung geht und eine in Reihe geschaltete lineare Induktivität. Dies wird damit begründet, daß bei größeren Strömen die Notwendigkeit einer Glättung sich verringern würde.

Es gibt nun auch unterbrechungsfreie Stromversorgungsanlagen, bei denen im Normalfall die Netzenergie mittels Gleich- und Wechselrichter in eine Energie gegebenenfalls anderer Frequenz umgeformt wird (vgl. z.B. DE-OS 36 37 338).

Die Aufgabe der vorliegenden Erfindung besteht darin, eine Anlage dieser Art so auszugestalten, daß auf einfache und kostengünstige Weise die Beanspruchung der Batterie durch Oberwellen im Dauernachladebetrieb verringert wird. Die Lösung besteht in einer Stromversorgung gemäß Patentanspruch.

Da die Notstrombatterie die meiste Zeit ihrer Lebensdauer im Normalbetrieb, d.h. in einer Betriebsweise, in der sie nachgeladen wird, läuft, kann man erwarten, daß die kurzen Perioden, in der die Drossel in Sättigung geht, d.h. also in Notfällen, keine praktische Verringerung der Batterielebensdauer verursachen werden.

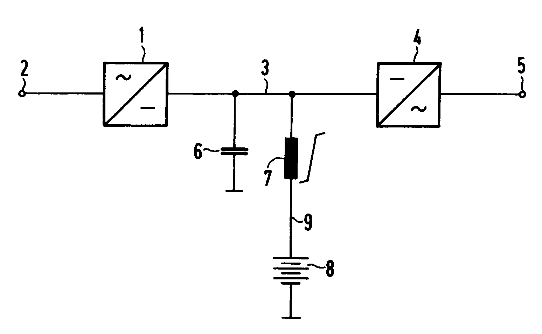

Anhand eines in der Zeichnung dargestellten Ausführungsbeispiels sei die Erfindung näher erläutert:
Aus einem ein- oder mehrphasigen Wechselspannungsnetz 2, welches nicht näher dargestellt ist, wird ein Halbleitergleichrichter 1 gespeist. Die an seinem Ausgang auftretende oberwellenbehaftete Gleichspannung wird durch den Glättungskondensator 6 geglättet und gelangt als Zwischenkreisspannung im Zwischenkreis 3 an einen Wechselrichter 4, der mit Thyristoren oder Transistoren aufgebaut sein kann. An den Ausgang 5 dieses Wechselrichters 4 sind dann die nichtgezeigten Verbraucher angeschlossen. Bei Netzausfall liefert eine Batterie 8 auf elektrolytischer Basis die notwendige Versorgungsspannung für den Wechselrichter 4. Es sind nun drei Betriebsfälle dieser Batterie zu unterscheiden. Im ersten Fall liefert im Notbetrieb die Batterie 8 die notwendige Spannung. Im zweiten Fall wird sie nach einer großen Entladung durch den Gleichrichter 1 relativ stark nachgeladen. Beide Fälle sind zeitlich außerordentlich kurz. Der Regelfall ist der, daß die Batterie mit relativ kleinen Strömen von ungefähr 10 bis 20% des Normalstromes nachgeladen wird, damit ihre Spannung aufrechterhalten bleibt. Es ist nun wesentlich, daß diese Nachladespannung möglichst oberwellenfrei ist. Hierzu wird in der Zuleitung 9 zwischen Gleichspannungszwischenkreis 3 und Batterie 8 eine Induktivität in Form einer Drossel 7 eingesetzt, die als Sperrwiderstand für den oberwellenbehafteten Strom des Gleichrichters 1 dient. Diese Drossel 7 ist als relativ billige und platzsparende Sättigungsdrossel, z.B. als Eisendrossel mit Ringbandkern, ausgebildet, d.h. arbeitet beim Nachladebetrieb als normale Induktivität hohen Widerstandes und geht bei Entladung, d.h. bei Entnahme von Nennstrom in den Sättigungsbetrieb über und stellt damit nur einen relativ geringen Widerstand dar.

## Patentansprüche

1. Unterbrechungsfreie Stromversorgung mit
a) einem an ein Wechselstromnetz (2) anschließbaren Gleichrichter (1),
b) einem an den Gleichrichter (1) angeschlossenen Wechselrichter (4) zur Speisung des Verbrauchers mit Netzenergie,
c) einem Glättungskondensator (6) im Gleichungszwischenkreis (3) zwischen Gleichrichter (1) und Wechselrichter (4),
d) eine parallel zum Glättungskondensator (6) liegende Reihenschaltung aus einer Sättigungsdrossel (7) und einer Pufferbatterie (8) und
e) eine Auslegung der Sättigungsdrossel als Eisendrossel derart, daß sie im Nachladebetrieb der Pufferbatterie (4) als Sperrwiderstand für die Oberwellen des aus dem Gleichspannungszwischenkreis (3) entnommenen Nachladestromes dient und bei Speisung der Verbraucher Entladungen der Pufferbatterie (8) im Notbetrieb bei Netzausfall in Eisensättigung geht.

## Claims

1. An uninterruptible power supply system comprising
a) a rectifier (1) connectible to an a.c. mains (2)
b) an inverter (4) connected to the rectifier (1) for supplying the consumer with mains energy,
c) a smoothing capacitor (6) in the d.c. voltage intermediate circuit (3) between the rectifier (1) and the inverter (4)
d) a series arrangement, connected in parallel to the smoothing capacitor (6), of a saturable choke (7) and a floating battery (8) and
e) a construction of the saturable choke as iron-cored choke in such manner that in the recharging operation of the floating battery (4) it serves as blocking resistor for the harmonics of the recharging current withdrawn from the d.c. voltage intermediate circuit (3) and in the event of discharges of the floating battery (8) during the supply of the consumers in emergency operation in the case of mains failure reaches iron saturation.

## Revendications

1. Alimentation en courant sans interruption comportant
a) un redresseur (1) pouvant être connecté à un réseau (2) à courant alternatif,
b) un onduleur (4) connecté au redresseur (1) et destiné à alimenter l'appareil d'utilisation en énergie du réseau,
c) un condensateur (6) de lissage interposé dans le circuit (3) intermédiaire de redressement entre le redresseur (1) et l'onduleur (4),
d) un circuit série branché en parallèle avec le condensateur (6) de lissage et constitué d'une inductance (7) de saturation et d'une batterie tampon (8), et
e) un agencement de l'inductance de saturation en tant qu'inductance à fer tel que, pendant la recharge de la batterie tampon (4), elle est utilisée en tant que résistance de blocage pour les harmoniques du courant de recharge prélevé du circuit (3) intermédiaire à tension continue et que, lors de l'alimentation des appareils d'utilisation, pendant les décharges de la batterie tampon (8), la bobine passe à l'état de saturation en fer, en régime de secours lors d'une défaillance du réseau.
